# EUROPEAN PATENT APPLICATION

(11) **EP 3 239 915 A1**
(43) Date of publication of application: **01.11.2017**
(21) Application number: 17165480.9
(22) Date of filing: 07.04.2017
(51) Int. Cl.: G06Q 20/40, G07F 19/00

(54) **SYSTEMS AND METHODS FOR DISPLAYING A DYNAMIC RISK LEVEL INDICATOR OF AN ATM SITE OR OTHER REMOTE MONITORING SITE ON A MAP FOR IMPROVED REMOTE MONITORING**

(30) Priority: 28.04.2016 US 201615141040
(71) Applicant: Honeywell International Inc., Morris Plains, NJ 07950 (US)
(72) Inventor: MEGANATHAN, Deepak Sundar, Morris Plains, NJ 07950 (US); SANJEEVI, Ruban, Morris Plains, NJ 07950 (US)
(74) Representative: Houghton, Mark Phillip

(57) **Abstract**

Systems and methods for displaying a dynamic risk level indicator of an ATM site or other remote monitoring site on a map are provided. Some methods can include receiving one or more pieces of data associated with an ATM site, assigning a risk level to the ATM site based on at least one of the one or more pieces of data, and displaying an identifier of the ATM site on a map displayed on a user interface device such that the identifier can visually identify a location of the remote device and the risk level assigned to the remote device.

## Description

### FIELD

The present invention relates generally to a remote monitoring system or central monitoring station monitoring ATM sites or other remote monitoring sites. More particularly, the present invention relates to systems and methods for displaying a dynamic risk level indicator of an ATM site or other remote monitoring site on a map for improved remote monitoring.

### BACKGROUND

Systems and methods for monitoring a plurality of ATM sites by a remote monitoring system or central monitoring station are known in the art. Indeed, the physical security of an ATM machine, the area surrounding the ATM machine, and a user of the ATM machine are ongoing challenges in the industry.

Known systems and methods for monitoring ATM sites by a remote monitoring system or central monitoring station are reactive in that the remote monitoring system, central monitoring station, or users or operators thereof react when an alarm is detected at an ATM site. For example, in many known systems and methods, an operator at a central monitoring station performs random live monitoring such that a visual indicator of ATM sites on a map provides no information about the ATM sites, other than the location thereof. Accordingly, the order in which ATM sites are monitored is not based on a plan that identifies priority or need, such as identifying ATM sites in locations that are critical or high risk during a particular time of day so that high risk ATM sites are monitored before medium and low risk ATM sites. Indeed, when a remote monitoring system or central monitoring station monitors a large number of ATM sites, such randomness and lack of priority can be problematic and not facilitate a user or operator identifying a risk or incident before any such risk or incident causes an alarm.

In view of the above, there is a continuing, ongoing need for improved systems and methods.

### BRIEF DESCRIPTION OF THE DRAWINGS

FIG. 1 is a block diagram of a system in accordance with disclosed embodiments;
FIG. 2 is a view of a map displayed on a user interface device in accordance with disclosed embodiments; and
FIG. 3 is a view of a map displayed on a user interface device in accordance with disclosed embodiments.

### DETAILED DESCRIPTION

While this invention is susceptible of an embodiment in many different forms, there are shown in the drawings and will be described herein in detail specific embodiments thereof with the understanding that the present disclosure is to be considered as an exemplification of the principles of the invention. It is not intended to limit the invention to the specific illustrated embodiments.

Embodiments disclosed herein can include systems and methods for displaying a dynamic risk level indicator of an ATM site on a map. For example, a remote monitoring system or central monitoring station, or a control panel thereof, can continuously or periodically collect data from a plurality of ATM sites and use the collected data to assign each ATM site with a high, medium, or low risk level. In accordance with disclosed embodiments, the assigned risk level can be continuously, periodically, or dynamically updated as new data is collected or as time elapses.

In some embodiments, systems and methods disclosed herein can display a map on a user interface device that can display and dynamically update a visual indicator indicative of the assigned risk level of some or all of the ATM sites monitored by a remote monitoring system or central monitoring station. For example, in some embodiments, the assigned risk level can be visually displayed via a heat map indication such that visual indicators of ATM sites assigned a high risk level can be displayed in red on the map, visual indicators of ATM sites assigned a medium risk level can be displayed in yellow on the map, and visual indicators of ATM sites assigned a low risk level can be displayed in green on the map.

In some embodiments, systems and methods disclosed herein can filter the displayed visual indicators so that only visual indicators for ATM sites with a predetermined risk level or a risk level identified by user input are displayed. In some embodiments, systems and methods disclosed herein can filter the displayed visual indicators so that only visual indicators for ATM sites within a zone or geo-fence identified by user input are displayed. In some embodiments, systems and methods disclosed herein can display an animation that shows the displayed visual indicators, and any changes thereto, over time so as to visually display trends and changes to assigned risk levels.

It is to be understood that a user interface device as disclosed herein can include a remote monitoring system, a central monitoring station, a control panel of a remote monitoring system, a control panel of a central monitoring station, or a mobile device, such as a smart phone or tablet computer, or wearable device, such as a smart watch or head's up display in communication with a remote monitoring system, central monitoring station, or control panel. It is also to be understood that a map as disclosed herein can include or be generated from a BIM of a region in which the ATM sites are located, for example, a large campus, complex, or city, or from a three-dimensional model of the region, a two-dimensional or three-dimensional image or file of the region, a high resolution image of the region, a 360 degree image of the region, a satellite image of the region, or an image or map of the image captured by a UAV or drone.

Users or operators of the remote monitoring system or central monitoring station, or a mobile or wearable device in communication therewith, can view the visual indicators of risk level and react accordingly, for example, by prioritizing the ATM sites and conducting live monitoring on ATM sites assigned a high risk level before conducting live monitoring on ATM sites assigned a medium or low risk level. In this manner, systems and methods disclosed herein can detect and identify incidents requiring user intervention before any alarm activation or that may not otherwise trigger alarm activation. In some embodiments, systems and methods disclosed herein can automatically display a status of and video data streams from cameras in or near an ATM site that has been identified as high risk so as to assist a user in readily conducting live monitoring on an ATM site assigned a high risk level.

In some embodiments, systems and methods disclosed herein can transmit one or more signals to ATM sites identified as high risk to audibly announce to users in the vicinity of the ATM site that the ATM site is high risk. Accordingly, both operators of a remote monitoring system or central monitoring station and users at an ATM site can be made aware of a high risk ATM site before any alarm activation or upon the occurrence of an incident that may not otherwise trigger alarm activation.

In accordance with disclosed embodiments, systems and methods disclosed herein can collect or receive some or all of the following data and use some or all of the collected or received data to assign a risk level to an ATM site: (1) a location of an ATM site, (2) a current time, (3) past or historical incidents around an ATM site, (4) current activities around an ATM site, (5) a condition and usage level of the ATM located at an ATM site, (6) a lighting level around an ATM site, and (7) user input identifying the risk level. In some embodiments, a risk level can be assigned on a scale of 1 to 10, with 10 being high risk, 5 being medium risk, 1 being low risk, and other numbers being assigned a nearest risk level.

For example, in some embodiments, systems and methods disclosed herein can identify the location of an ATM site and use the identified location to assign a risk level to the ATM site. The identified location can include the ATM site's isolation from or proximity to a city, including whether the ATM site is in an isolated area or near a highway roadside or the like. In some embodiments, systems and methods disclosed herein can identify an ATM site located outside of a city as being more vulnerable than an ATM site located inside of a city center and can assign a risk level accordingly. In some embodiments, systems and methods disclosed herein can identify the location of an ATM site by receiving user input, for example, during installation of an ATM, and in some embodiments, systems and methods disclosed herein can identify the location of an ATM site based on the range of a signal received from the ATM site.

In some embodiments, systems and methods disclosed herein can identify a current time and use the identified current time to assign a risk level to an ATM site. For example, the identified current time can include an identification of daytime or nighttime, and systems and methods disclosed herein can identify an ATM site, particularly an ATM site located in an isolated area, as being more vulnerable during the nighttime than during the daytime and assign a risk level accordingly.

In some embodiments, systems and methods disclosed herein can identify past or historical incidents around an ATM site and use the identified incidents to assign a risk level to the ATM site. For example, identified past or historical incidents can include occurrences of a user assault at the ATM site, and when such incidents are identified or there is a higher rate of alarm or incident occurrences at the ATM site as compared to nearby ATM sites, systems and methods disclosed herein can identify the ATM site as being vulnerable and identify a risk level accordingly. In some embodiments, systems and methods disclosed herein can identify past or historical incidents around the ATM site from a database device storing occurrences of past or historical incidents or via received user input, for example, input identifying similarities or dissimilarities between the ATM site and nearby ATM sites. In some embodiments, the database device can be located on a cloud platform.

In some embodiments, systems and methods disclosed herein can identify current activities around an ATM site and use the identified activities to assign a risk level to the ATM site. For example, identified current activities can include movement, including movement by people, detected by a camera or PIR sensor installed on or near the ATM site, or by a city surveillance camera in the vicinity of the ATM site. When the detected movement or flow of people increases or decreases, systems and methods disclosed herein can identify the ATM site as being more or less vulnerable and identify a risk level accordingly. In some embodiments, systems and methods disclosed herein can collect, receive, or sense current activities around the ATM site only during predetermined periods of time, such as at nighttime. For example, when an ATM site is located inside of a building where movement by people is unexpected during the nighttime, systems and methods disclosed herein can identify the ATM site as high risk if such movement is detected during the nighttime. In some embodiments, the high risk level can be assigned for a predetermined period of time after such detection, and thereafter, can return to a previously assigned risk level, absent any other received or collected data that would otherwise cause the risk level to remain high.

In some embodiments, systems and methods disclosed herein can identify the condition or usage level of an ATM located at an ATM site and use the identified condition or usage level to assign a risk level. For example, when systems and methods disclosed herein identify an ATM's chest door as being open for cash loading, systems and methods disclosed herein can identify the ATM site as being more vulnerable than when the chest door is closed and can assign a risk level accordingly. Similarly, when systems and methods disclosed herein identify an ATM site without a back door set in an open place, systems and methods disclosed herein can identify the ATM site as being more vulnerable than an ATM site with a back door setup and can assign a risk level accordingly. Moreover, when systems and methods disclosed herein identify that an ATM site is used more frequently as compared to nearby ATM sites, systems and methods disclosed herein can identify the ATM site as being less vulnerable than less used ATM sites and assign a risk level accordingly. In some embodiments, systems and methods disclosed herein can identify a use level of an ATM site based on data collected or activities identified by a camera or PIR sensor installed on or near the ATM site.

In some embodiments, systems and methods disclosed herein can identify the lighting level around an ATM site and use the identified lighting level to assign a risk level. For example, systems and methods disclosed herein can identify a level or status of inside or outside lighting at an ATM site, or of lights on or near an ATM device, via a light sensor or camera on or near the ATM site, can identify the ATM site as being more vulnerable when lights are off or lighting level is low, and can assign a risk level accordingly.

Finally, in some embodiments, systems and methods disclosed herein can receive user input identifying a risk level of an ATM site and assign the identified risk level to the ATM site accordingly.

Systems and methods disclosed herein are described above and herein in connection with ATM sites. However, it is to be understood that systems and methods disclosed herein are not so limited and can be used in connection with any remote monitoring site as would be known by one of ordinary skill in the art, including, but not limited to, retail chains and shops, jewelry chains and shops, small business outlets and shops, bank branches, and the like.

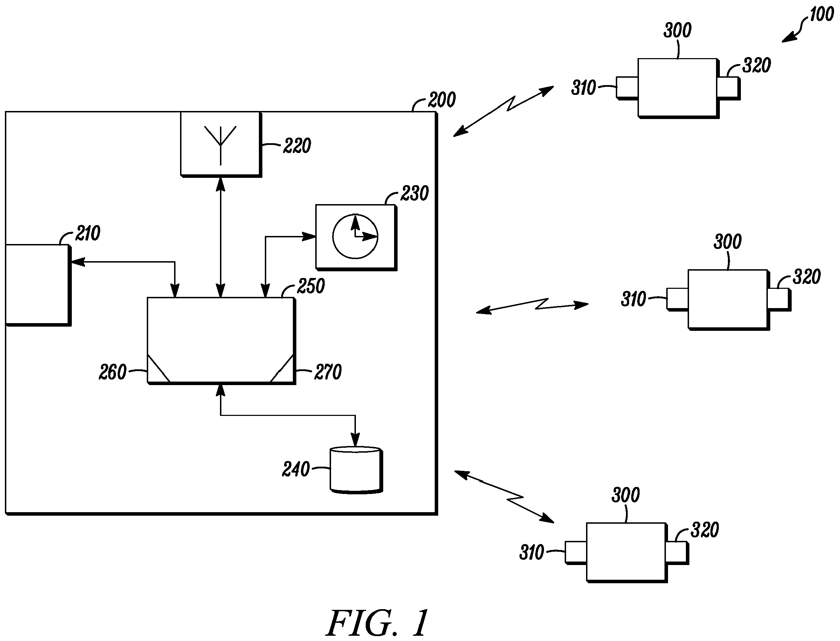

FIG. 1 is a block diagram of a system 100 in accordance with disclosed embodiments. As seen in FIG. 1, the system 100 can include a device 200 wirelessly communicating with a plurality of devices 300. In some embodiments, the device 200 can include a remote monitoring system, a central monitoring station, or a control panel thereof, and in some embodiments, each of the plurality of devices 300 can include an ATM device or an ATM site. Each of the plurality of devices 300 can include one or more sensors 310, cameras 320, or the like on or in the vicinity of the device 300 that is also in wireless communication with the device 200.

The device 200 can include a user interface device 210, a transceiver 220, a clock 230, and a database device 240, each of which can be in communication with control circuitry 250, one or more programmable processors 260, and executable control software 270 as would be understood by one of ordinary skill in the art. The executable control software 270 can be stored on a transitory or non-transitory computer readable medium, including, but not limited to, local computer memory, RAM, optical storage media, magnetic storage media, flash memory, and the like. In some embodiments, some or all of the control circuitry 250, programmable processor 260, and control software 270 can execute and control the methods described above and herein.

For example, the control circuitry 250, programmable processor 260, and control software 270 can continuously or periodically receive data from one or more of the devices 300, sensors 310, or cameras 320 in communication with the device 200, via the transceiver 220, from the clock 230, from the database device 240, and/or from a database device located on a cloud platform. Responsive to receiving such data, the control circuitry 250, programmable processor 260, and control software 270 can assign each device 300 a risk level, for example, a high, medium, or low risk level, and can continuously, periodically, or dynamically update the assigned risk level as new or updated data is received from one or more of the devices 300, sensors 310, cameras 320, clock 230, database device 240, and/or the database device located on a cloud platform.

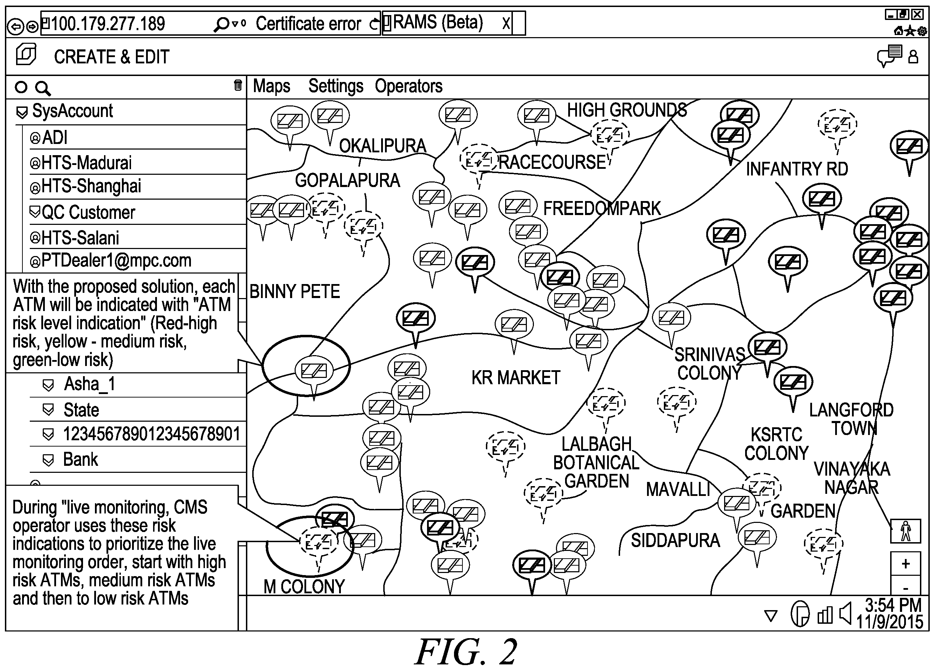

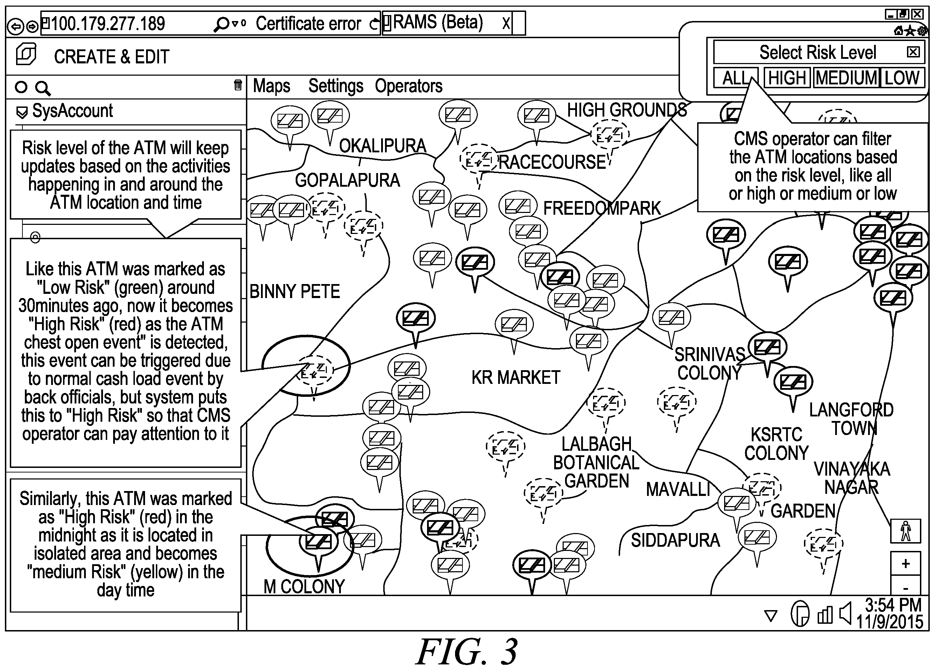

The control circuitry 250, programmable processor 260, and control software can also cause a map to be displayed on the user interface device 210 and can cause one or more visual indicators to be displayed on the map on the user interface device 210 such that each displayed visual indicator is indicative a location of the device 300 represented by the respective indicator and of the risk level assigned to the device 300 represented by the respective indicator. For example, FIGs. 2 and 3 are views of a map displayed on a user interface device 210 in accordance with disclosed embodiments. As seen in FIGs. 2 and 3, some of the displayed visual indicators can identify a represented remote device as having a high risk level assigned thereto (RED), some of the displayed visual indicators can identify a represented remote device as having a medium risk level assigned thereto (YELLOW), and some of the displayed visual indicators can identify a represented remote device as having a low risk level assigned thereto (GREEN). FIG. 2 is representative of displayed visual indicators at a first time, and FIG. 3 is representative of displayed at a second, subsequent time. As seen when comparing FIG. 2 to FIG. 3, the displayed visual indicators can change over time to identify a changed assigned risk level as new data is collected or as time elapses.

Although a few embodiments have been described in detail above, other modifications are possible. For example, the logic flows described above do not require the particular order described, or sequential order, to achieve desirable results. Other steps may be provided, or steps may be eliminated, from the described flows, and other components may be added to, or removed from, the described systems. Other embodiments may be within the scope of the invention.

From the foregoing, it will be observed that numerous variations and modifications may be effected without departing from the spirit and scope of the invention. It is to be understood that no limitation with respect to the specific system or method described herein is intended or should be inferred. It is, of course, intended to cover all such modifications as fall within the spirit and scope of the invention.

### PREFERRED EMBODIMENTS OF THE PRESENT INVENTION

### ARE AS NUMBERED BELOW:

1. A method comprising:
   receiving one or more pieces of data associated with a remote device;
   assigning a risk level to the remote device based on at least one of the one or more pieces of data; and
   displaying an identifier of the remote device on a map displayed on a user interface device,
   wherein the identifier visually identifies a location of the remote device and the risk level assigned to the remote device.
2. The method of 1 further comprising:
   after assigning the risk level to the remote device, receiving one or more pieces of new data associated with the remote device;
   assigning a new risk level to the remote device based on at least one of the one or more pieces of new data; and
   displaying a new identifier of the remote device on the map displayed on the user interface device,
   wherein the new identifier visually identifies the location of the remote device and the new risk level assigned to the remote device.
3. The method of 1 wherein a color of the identifier visually identifies the risk level assigned to the remote device.
4. The method of 1 further comprising:
   displaying an identifier of a plurality of remote devices on the map on the user interface device; and
   filtering the displayed identifiers to display an identifier of only a sub-set of the plurality of remote devices on the map on the user interface device,
   wherein the sub-set includes devices having a first risk level in a plurality of risk levels, or wherein the sub-set includes devices represented by identifiers within a user-identified zone on the map.
5. The method of 1 further comprising:
   displaying a first identifier of the remote device on the map corresponding to a first time; and
   displaying a second identifier of the remote device on the map corresponding to a second time,
   wherein first identifier is visually different than the second identifier.
6. The method of 1 further comprising displaying at least some of the one or more pieces of data associated with the remote device on the user interface device when the risk level assigned to the remote device includes a first risk level in a plurality of risk levels.
7. The method of 1 further comprising transmitting a signal to the remote device to audibly identify the risk level assigned to the remote device at the remote device.
8. The method of 1 wherein receiving the one or more pieces of data associated with the remote device includes identifying the location of the remote device, identifying a current time, identifying one or more past or historical incidents associated with the remote device, identifying one or more current activities associated with the remote device, identifying a condition of the remote device, identifying a usage level of the remote device, or identifying a lighting level in or around the remote device.
9. The method of 8 further comprising identifying the location of the remote device, identifying the one or more current activities associated with the remote device, identifying the condition of the remote device, identifying the usage level of the remote device, or identifying the lighting level in or around the remote device based on a signal received from a camera or sensor associated with the remote device.
10. The method of 1 wherein receiving the one or more pieces of data associated with the remote device includes receiving user input identifying the risk level.
11. The method of 1 wherein the user interface device includes a mobile device, a smart phone, a tablet computer, or a wearable device.
12. The method of 1 further comprising generating the map from a BIM of a region in which the remote device is located or from a three-dimensional model of the region, a two-dimensional or three-dimensional image or file of the region, a high resolution image of the region, a 360 degree image of the region, a satellite image of the region, or an image or map of the region captured by a UAV or drone.
13. A system comprising:
   a transceiver;
   a user interface device;
   a programmable processor; and
   executable control software stored on a non-transitory computer readable medium,
   wherein the transceiver receives one or more pieces of data associated with a remote device,
   wherein the programmable processor and the executable control software assign a risk level to the remote device based on at least one of the one or more pieces of data,
   wherein the programmable processor and the executable control software cause an identifier of the remote device to be displayed on a map displayed on the user interface device, and
   wherein the identifier visually identifies a location of the remote device and the risk level assigned to the remote device.
14. The system of 13 wherein, after the programmable processor and the executable control software assign the risk level to the remote device, the transceiver receives one or more pieces of new data associated with the remote device, wherein the programmable processor and the executable control software assign a new risk level to the remote device based on at least one of the one or more pieces of new data, wherein the programmable processor and the executable control software display a new identifier of the remote device on the map displayed on the user interface device, and wherein the new identifier visually identifies the location of the remote device and the new risk level assigned to the remote device.
15. The system of 13 wherein a color of the identifier visually identifies the risk level assigned to the remote device.
16. The system of 13 wherein the programmable processor and the executable control software cause an identifier of a plurality of remote device to be displayed on the map displayed on the user interface device, wherein the programmable processor and the executable control software filter the displayed identifiers to cause only a sub-set of the plurality of remote identifiers to be displayed on the map displayed on the user interface device, and wherein the sub-set includes devices having a first risk level in a plurality of risk levels, or wherein the sub-set includes devices represented by identifiers within a user-identified zone on the map.
17. The system of 13 further comprising:
   a clock device,
   wherein the programmable processor and the executable control software receive a time signal from the clock device,
   wherein the programmable processor and the executable control software cause a first identifier of the remote device to be displayed on the map when the time signal corresponds to a first time,
   wherein the programmable processor and the executable control software cause a second identifier of the remote device to be displayed on the map when the time signal corresponds to a second time, and
   wherein first identifier is visually different than the second identifier.
18. The system of 13 wherein the programmable processor and the executable control software cause at least some of the one or more pieces of data associated with the remote device to be displayed on the user interface device when the risk level assigned to the remote device includes a first risk level in a plurality of risk levels.
19. The system of 13 wherein the transceiver transmits a signal to the remote device to audibly identify the risk level assigned to the remote device at the remote device.
20. The system of 13 further comprising:
   a database device or a clock device;
   wherein the transceiver receiving the one or more pieces of data associated with the remote device includes the programmable processor and the executable control software retrieving the location of the remote device or one or more past or historical incidents associated with the remote device from the database device, or
   wherein the transceiver receiving the one or more pieces of data associated with the remote device includes the programmable processor and the executable control software receiving a signal from the clock device identifying a current time.
21. The system of 20 wherein the database device is located on a cloud platform.
22. The system of 13 wherein the transceiver receiving the one or more pieces of data associated with the remote device includes the transceiver receiving a signal identifying one or more current activities associated with the remote device, identifying a condition of the remote device, identifying a usage level of the remote device, or identifying a lighting level in or around the remote device from a camera or sensor associated with the remote device.
23. The system of 13 wherein the transceiver receiving the one or more pieces of data associated with the remote device includes the user interface device receiving user input identifying the risk level.
24. The system of 13 wherein the user interface device includes a mobile device, a smart phone, a tablet computer, or a wearable device.
25. The system of 13 wherein the map is generated from a BIM of a region in which the remote device is located or from a three-dimensional model of the region, a two-dimensional or three-dimensional image or file of the region, a high resolution image of the region, a 360 degree image of the region, a satellite image of the region, or an image or map of the region captured by a UAV or drone.

## Claims

1. A method comprising:
receiving one or more pieces of data associated with a remote device;
assigning a risk level to the remote device based on at least one of the one or more pieces of data; and
displaying an identifier of the remote device on a map displayed on a user interface device,
wherein the identifier visually identifies a location of the remote device and the risk level assigned to the remote device.

2. The method of claim 1 further comprising:
after assigning the risk level to the remote device, receiving one or more pieces of new data associated with the remote device;
assigning a new risk level to the remote device based on at least one of the one or more pieces of new data; and
displaying a new identifier of the remote device on the map displayed on the user interface device,
wherein the new identifier visually identifies the location of the remote device and the new risk level assigned to the remote device.

3. The method of claim 1 wherein a color of the identifier visually identifies the risk level assigned to the remote device.

4. The method of claim 1 further comprising:
displaying an identifier of a plurality of remote devices on the map on the user interface device; and
filtering the displayed identifiers to display an identifier of only a sub-set of the plurality of remote devices on the map on the user interface device,
wherein the sub-set includes devices having a first risk level in a plurality of risk levels, or wherein the sub-set includes devices represented by identifiers within a user-identified zone on the map.

5. The method of claim 1 further comprising:
displaying a first identifier of the remote device on the map corresponding to a first time; and
displaying a second identifier of the remote device on the map corresponding to a second time,
wherein first identifier is visually different than the second identifier.

6. The method of claim 1 further comprising displaying at least some of the one or more pieces of data associated with the remote device on the user interface device when the risk level assigned to the remote device includes a first risk level in a plurality of risk levels.

7. The method of claim 1 further comprising transmitting a signal to the remote device to audibly identify the risk level assigned to the remote device at the remote device.

8. The method of claim 1 wherein receiving the one or more pieces of data associated with the remote device includes identifying the location of the remote device, identifying a current time, identifying one or more past or historical incidents associated with the remote device, identifying one or more current activities associated with the remote device, identifying a condition of the remote device, identifying a usage level of the remote device, or identifying a lighting level in or around the remote device.

9. The method of claim 8 further comprising identifying the location of the remote device, identifying the one or more current activities associated with the remote device, identifying the condition of the remote device, identifying the usage level of the remote device, or identifying the lighting level in or around the remote device based on a signal received from a camera or sensor associated with the remote device.

10. The method of claim 1 wherein receiving the one or more pieces of data associated with the remote device includes receiving user input identifying the risk level.

11. The method of claim 1 wherein the user interface device includes a mobile device, a smart phone, a tablet computer, or a wearable device.

12. The method of claim 1 further comprising generating the map from a BIM of a region in which the remote device is located or from a three-dimensional model of the region, a two-dimensional or three-dimensional image or file of the region, a high resolution image of the region, a 360 degree image of the region, a satellite image of the region, or an image or map of the region captured by a UAV or drone.

13. A system comprising:
a transceiver;
a user interface device;
a programmable processor; and
executable control software stored on a non-transitory computer readable medium,
wherein the transceiver receives one or more pieces of data associated with a remote device,
wherein the programmable processor and the executable control software assign a risk level to the remote device based on at least one of the one or more pieces of data,
wherein the programmable processor and the executable control software cause an identifier of the remote device to be displayed on a map displayed on the user interface device, and
wherein the identifier visually identifies a location of the remote device and the risk level assigned to the remote device.

14. The system of claim 13 wherein, after the programmable processor and the executable control software assign the risk level to the remote device, the transceiver receives one or more pieces of new data associated with the remote device, wherein the programmable processor and the executable control software assign a new risk level to the remote device based on at least one of the one or more pieces of new data, wherein the programmable processor and the executable control software display a new identifier of the remote device on the map displayed on the user interface device, and wherein the new identifier visually identifies the location of the remote device and the new risk level assigned to the remote device.

15. The system of claim 13 wherein a color of the identifier visually identifies the risk level assigned to the remote device.
